# EUROPEAN PATENT APPLICATION

(11) **EP 4 503 187 A1**
(43) Date of publication of application: **05.02.2025**
(21) Application number: 22935696.9
(22) Date of filing: 12.12.2022
(51) Int. Cl.: H01M 4/505, C01G 45/06

(54) **POSITIVE ELECTRODE ACTIVE MATERIAL FOR NONAQUEOUS ELECTROLYTE SECONDARY BATTERIES**

(30) Priority: 31.03.2022 JP 2022058486
(71) Applicant: Panasonic Intellectual Property Management Co., Ltd., Osaka-shi, Osaka 540-6207 (JP)
(72) Inventor: ESAKI, Shogo, Kadoma-shi, Osaka 571-0057 (JP); SAITO, Motoharu, Kadoma-shi, Osaka 571-0057 (JP); HIBINO, Mitsuhiro, Kadoma-shi, Osaka 571-0057 (JP); MATSUSHITA, Junko, Kadoma-shi, Osaka 571-0057 (JP); NAKURA, Kensuke, Kadoma-shi, Osaka 571-0057 (JP)
(74) Representative: Novagraaf International SA
(86) International application number: PCT/JP2022/045645
(87) International publication number: WO 2023/188567

(57) **Abstract**

A positive electrode active material for nonaqueous electrolyte secondary batteries according to the present invention is characterized by being a composite oxide which is represented by general formula LixTMtmMyO2-fFf and has a crystal structure that belongs to the space group Fm-3m. In the general formula, TM represents a transition metal; M represents a non-transition metal; x, tm, y and f satisfy 1.75 ≤ x + tm + y ≤ 2 and 0 < f ≤ 0.7; and if Q = 2 × tm × (1 - (1 - f/2)5), 0.8 ≤ Q ≤ 1.5 is satisfied.

## Description

### TECHNICAL FIELD

The present disclosure relates to a technique of a positive electrode active material for a non-aqueous electrolyte secondary battery.

### BACKGROUND

As a secondary battery having a high output and a high energy density, a non-aqueous electrolyte secondary battery has been widely used, in which the non-aqueous electrolyte secondary battery includes a positive electrode, a negative electrode, and a non-aqueous electrolyte, and performs charging and discharging by moving lithium ions and the like between the positive electrode and the negative electrode.

For example, Patent Literature 1 discloses, as a positive electrode active material used in a non-aqueous electrolyte secondary battery, a composite oxide that has a crystal structure belonging to a space group Fm-3m, contains lithium and molybdenum, and is substantially free of chromium.

### CITATION LIST

### PATENT LITERATURE

Patent Literature 1: JP 2017-202954 A

### SUMMARY

An object of the present disclosure is to provide a positive electrode active material for a non-aqueous electrolyte secondary battery having a high discharge voltage.

A positive electrode active material for a non-aqueous electrolyte secondary battery according to an aspect of the present disclosure is a composite oxide that has a crystal structure belonging to a space group Fm-3m and is represented by a general formula: LiₓTMtₘM_{y}O_{2-f}F_{f}, and in the general formula, TM represents a transition metal, M represents a non-transition metal, x, tm, y, and f satisfy 1.75 ≤ x + tm + y ≤ 2 and 0 < f ≤ 0.7, and when Q = 2 × tm × {1 - (1 - f/2)⁵}, 0.8 ≤ Q ≤ 1.5 is satisfied.

According to an aspect of the present disclosure, it is possible to provide a positive electrode active material for a non-aqueous electrolyte secondary battery having a high discharge voltage.

### BRIEF DESCRIPTION OF DRAWINGS

FIG. 1 is a cross-sectional view of a non-aqueous electrolyte secondary battery as an example of an embodiment.
FIG. 2 is a view showing an X-ray diffraction result of Example 1.
FIG. 3 is a view showing an X-ray diffraction result of Example 11.
FIG. 4 is a view showing an X-ray diffraction result of Comparative Example 1.
FIG. 5 is a view showing a charge and discharge curve of Example 1.
FIG. 6 is a view showing a charge and discharge curve of Example 11.
FIG. 7 is a view showing a charge and discharge curve of Comparative Example 1.

### DESCRIPTION OF EMBODIMENTS

Hereinafter, an example of a non-aqueous electrolyte secondary battery using a positive electrode active material for a non-aqueous electrolyte secondary battery of the present disclosure will be described.

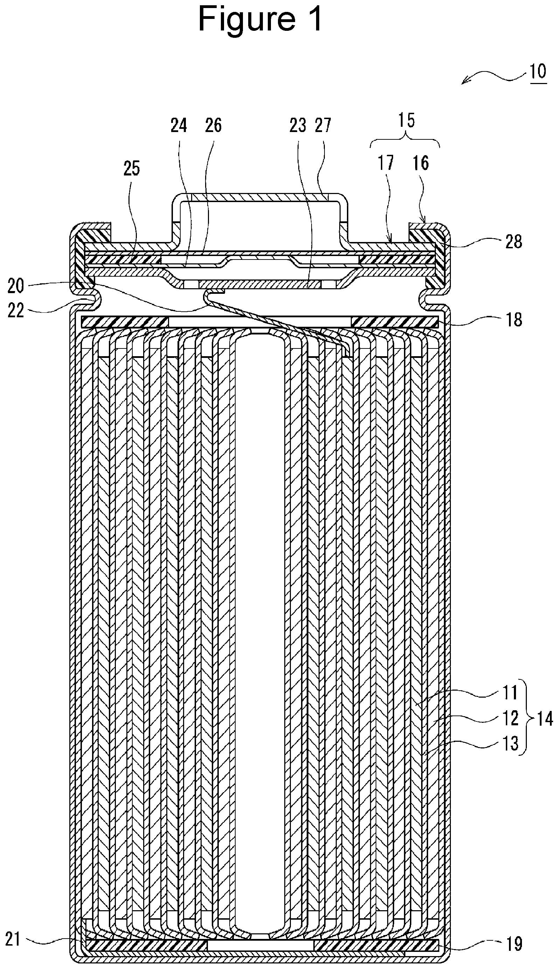

FIG. 1 is a cross-sectional view of a non-aqueous electrolyte secondary battery as an example of an embodiment. A non-aqueous electrolyte secondary battery 10 illustrated in FIG. 1 includes a wound electrode assembly 14 formed by wounding a positive electrode 11 and a negative electrode 12 with a separator 13 interposed between the positive electrode 11 and the negative electrode 12, a non-aqueous electrolyte, insulating plates 18 and 19 that are disposed on upper and lower sides of the electrode assembly 14, respectively, and a battery case 15 housing the members. The battery case 15 includes a case body 16 and a sealing assembly 17 for closing an opening of the case body 16. Note that, instead of the wound electrode assembly 14, another form of an electrode assembly such as a stacked electrode assembly in which a positive electrode and a negative electrode are alternately stacked with a separator interposed therebetween may be applied. In addition, examples of the battery case 15 include metal cases having a cylindrical shape, a square shape, a coin shape, a button shape, or the like, and resin cases (laminated batteries) formed by lamination with a resin sheet.

The non-aqueous electrolyte contains, for example, a non-aqueous solvent and an electrolyte salt dissolved in the non-aqueous solvent. Examples of the non-aqueous solvent include esters, ethers, nitriles, amides, and a mixed solvent of two or more thereof. The non-aqueous solvent may contain a halogen-substituted product in which at least some hydrogens in these solvents are substituted with halogen atoms such as fluorine. Examples of the electrolyte salt include lithium salts such as LiPF₆. Note that the non-aqueous electrolyte is not limited to the liquid electrolyte, and may be a solid electrolyte using a gel polymer or the like.

The case body 16 is, for example, a bottomed cylindrical metal container. A gasket 28 is provided between the case body 16 and the sealing assembly 17 to secure a sealing property of the inside of the battery. The case body 16 has, for example, a projecting portion 22 in which a part of a side part thereof projects inside for supporting the sealing assembly 17. The projecting portion 22 is preferably formed in an annular shape along a circumferential direction of the case body 16, and supports the sealing assembly 17 on an upper surface thereof.

The sealing assembly 17 has a structure in which a filter 23, a lower vent member 24, an insulating member 25, an upper vent member 26, and a cap 27 are sequentially stacked from the electrode assembly 14. Each member constituting the sealing assembly 17 has, for example, a disk shape or a ring shape, and the respective members except for the insulating member 25 are electrically connected to each other. The lower vent member 24 and the upper vent member 26 are connected to each other at the respective central parts thereof, and the insulating member 25 is interposed between the respective circumferential parts of the vent members 24 and 26. When the internal pressure of the non-aqueous electrolyte secondary battery 10 is increased by heat generation due to an internal short circuit or the like, for example, the lower vent member 24 is deformed so as to push the upper vent member 26 up toward the cap 27 side and is broken, and thus, a current pathway between the lower vent member 24 and the upper vent member 26 is cut off. When the internal pressure is further increased, the upper vent member 26 is broken, and gas is discharged through an opening of the cap 27.

In the non-aqueous electrolyte secondary battery 10 illustrated in FIG. 1, a positive electrode lead 20 attached to the positive electrode 11 extends through a through-hole of the insulating plate 18 toward a side of the sealing assembly 17, and a negative electrode lead 21 attached to the negative electrode 12 extends through the outside of the insulating plate 19 toward the bottom side of the case body 16. The positive electrode lead 20 is connected to a lower surface of the filter 23 that is a bottom plate of the sealing assembly 17 by welding or the like, and the cap 27 that is a top plate of the sealing assembly 17 electrically connected to the filter 23 serves as a positive electrode terminal. The negative electrode lead 21 is connected to a bottom inner surface of the case body 16 by welding or the like, and the case body 16 serves as a negative electrode terminal.

Hereinafter, the positive electrode 11, the negative electrode 12, and the separator 13 will be described in detail.

### <Positive Electrode>

The positive electrode 11 includes a positive electrode current collector and a positive electrode mixture layer disposed on the positive electrode current collector. As the positive electrode current collector, a foil of a metal stable in a potential range of the positive electrode, such as aluminum, a film in which the metal is disposed on a surface layer, or the like can be used. A thickness of the positive electrode current collector is preferably, for example, in a range of greater than or equal to 1 µm and less than or equal to 20 µm.

It is preferable that the positive electrode mixture layer contains a positive electrode active material and further contains a binding agent, a conductive agent, or the like. A thickness of the positive electrode mixture layer is preferably, for example, in a range of greater than or equal to 10 µm and less than or equal to 300 µm.

The positive electrode 11 is obtained by, for example, applying a positive electrode mixture slurry containing a positive electrode active material, a binding agent, a conductive agent, and the like onto a positive electrode current collector, drying the positive electrode current collector to form a positive electrode mixture layer on the positive electrode current collector, and rolling the positive electrode mixture layer.

The positive electrode active material includes a composite oxide having a crystal structure belonging to a space group Fm-3m.

The crystal structure belonging to the space group Fm-3m means having a peak attributable to the space group Fm-3m in a diffraction pattern obtained by X-ray diffraction (XRD) measurement. Note that "-3" in the space group "Fm-3m" represents a target element of a 3-fold rotation-inversion axis, and should be originally indicated by adding "3" with an upper bar "-". The X-ray diffraction pattern of the composite oxide can be performed by powder X-ray diffraction measurement using an X-ray diffractometer ("MiniFlexII" manufactured by Rigaku Corporation) with a radiation source of CuKα rays, a tube voltage of 40 kV, and a tube current of 15 mA. In this case, the diffracted X-ray passes through a Kβ filter having a thickness of 30 µm and is detected by a high-speed one-dimensional detector (D/teX Ultra 2). In addition, a sampling width is 0.02°, a scan speed is 10°/min, a divergence slit width is 0.625°, a light receiving slit width is 13 mm (OPEN), and a scattering slit width is 8 mm. Then, the crystal structure of the composite oxide can be identified by Rietveld analysis using a "RIETAN-FP" program (F. Izumi and K. Momma, Solid State Phenom., 130, 15-20 (2007)) based on the obtained X-ray diffraction pattern. Note that the X-ray diffractometer is not limited to the above apparatus, and the X-ray source is also not limited. The X-ray diffraction measurement conditions are not limited to the above conditions. In addition, a method for analyzing the obtained X-ray diffraction pattern is not limited to the above method.

The composite oxide having a crystal structure belonging to a space group Fm-3m is represented by a general formula: LiₓTMₜₘM_{y}O_{2-f}F_{f}, and in the general formula, TM represents a transition metal, M represents a non-transition metal, x, tm, y, and f satisfy 1.75 ≤ x + tm + y ≤ 2 and 0 < f ≤ 0.7, and when Q = 2 × tm × {1 - (1 - f/2)⁵}, 0.8 ≤ Q ≤ 1.5 is satisfied. Here, Q represents the number of oxygen bonded to the transition metal bonded to fluorine. By using such a composite oxide, a discharge voltage of the positive electrode active material can be increased. Note that the crystal structure may have vacancies in which Li atoms, TM atoms, and M atoms are not disposed. Here, having vacancies means that vacancies not filled with Li atoms, TM atoms, and M atoms are present in the composite oxide in the positive electrode active material taken out immediately after manufacture or by disassembling the secondary battery in a discharged state. A molar ratio of the vacancies is preferably greater than or equal to 0.05 and less than or equal to 0.25.

In the general formula, x, tm, y, and f preferably satisfy, for example, 1.0 < x ≤ 1.4, 0.4 ≤ tm < 1.0, 0 ≤ y ≤ 0.2, and 0.2 ≤ f ≤ 0.6 in that a higher discharge voltage can be obtained.

The composite oxide preferably contains Mn as the transition metal (TM) in that, for example, a higher discharge voltage can be obtained or a discharge capacity can be improved, and in the general formula, a molar ratio tm_Mn of Mn in tm preferably is 0.6 < tm_Mn < 0.8.

The composite oxide preferably contains, for example, Mn and a transition metal other than Mn from the viewpoint of being able to obtain a higher discharge voltage or improving the discharge capacity. Examples of the transition metal other than Mn include Ni, Co, Fe, Ti, Y, Zr, Nb, Mo, Sc, W, V, Gd, Ce, and Ta, and Ce, Gd, and Nb are more preferable.

Examples of the non-transition metal (M) contained in the composite oxide include Al, Mg, Sb, Bi, Ca, Sr, Mg, K, Ga, Sn, and Zn, and Ga and Mg are more preferable.

The composite oxide contains, for example, Mn, from the viewpoint of being able to obtain a higher discharge voltage or improving the discharge capacity, and preferably contains at least one element of five elements of Gd, Ce, and Nb, which are the transition metals (TM), and Mg and Ga, which are the non-transition metals (M), and more preferably contains at least three elements of the five elements. In addition, a molar ratio of each of Mg, Gd, Ce, Nb, and Ga in the composite oxide is preferably greater than 0 and less than or equal to 0.025.

Confirmation of the composition of the composite oxide can be performed by, for example, Rietveld analysis on parameters obtained by inductively coupled plasma emission spectrometry, X-ray photoelectron spectroscopy, and powder X-ray diffraction.

A method for producing the composite oxide is not particularly limited, and may be a known method in synthesis of a positive electrode active material, and the composite oxide can be obtained by, for example, treating a lithium source, an additive element source, a fluorine source, or the like by a mechanochemical method. The mechanochemical method (also referred to as a mechanochemical treatment or the like) refers to a synthesis method using a mechanochemical reaction. The mechanochemical reaction refers to a chemical reaction such as a crystallization reaction, a solid solution reaction, or a phase transition reaction using high energy locally generated by mechanical energy such as friction or compression in a process of crushing a solid substance. Examples of an apparatus for performing the mechanochemical method include a pulverizer and a disperser such as a ball mill, a bead mill, a vibration mill, a turbo mill, a mechano-fusion, or a disk mill. Among them, a ball mill is preferable. The mechanochemical treatment may be performed in an inert gas atmosphere such as argon gas, or may be performed in an oxygen-containing atmosphere or the like.

Examples of the lithium source include lithium carbonate and lithium hydroxide. The additive element source is a transition metal-containing compound and a non-transition metal-containing compound, and is, for example, a transition metal-containing oxide or hydroxide, a non-transition metal-containing oxide or hydroxide, a transition metal- or non-transition metal-containing composite oxide or hydroxide, and the like. The fluorine source is a fluoride such as lithium fluoride, molybdenum fluoride, or magnesium fluoride. Note that lithium fluoride may be used as a lithium source, a transition metal fluoride such as molybdenum fluoride may be used as a transition metal-containing compound as an additive element source, and a non-transition metal fluoride such as magnesium fluoride may be used as a non-transition metal-containing compound as an additive element source.

The composite oxide obtained by the mechanochemical treatment may be subjected to a heat treatment. A heating temperature is not particularly limited, and may be, for example, in a range of greater than or equal to 500°C and less than or equal to 1,000°C. In addition, a heating time is not particularly limited, and is, for example, greater than or equal to 1 hour and less than or equal to 20 hours. The heating may be performed in an inert gas atmosphere such as argon gas, or may be performed in an oxygen-containing atmosphere or the like.

The positive electrode active material may be composed of only the composite oxide, but may contain an active material other than the composite oxide. Examples of the other active material include a composite oxide represented by LiₓMO_{y} (M represents at least one kind of transition metal) (LiₓCoO₂, LiₓNiO₂, LiₓMnO₂, LiₓNi_{α}Co_{(1-α)}O₂, LiₓNi_{α}Mn_{β}Co_{(1-α-β)}O₂, or the like having a layered α-NaFeO₂-type crystal structure, or LiₓMn₂O₄, LiₓNi_{α}Mn_{(2-α)}O₄, or the like having a spinel-type crystal structure), and a polyanion compound represented by Li_{w}M'ₓ(XO_{y})_{z} (M' represents at least one kind of transition metal, and X represents, for example, P, Si, B, V, or the like) (LiFePO₄, LiMnPO₄, LiNiPO₄, LiCoPO₄, Li₃V₂(PO₄)₃, Li₂MnSiO₄, Li₂CoPO₄F, or the like).

A content of the composite oxide that has a crystal structure belonging to a space group Fm-3m and is represented by a general formula: LiₓTMₜₘM_{y}O_{2-f}F_{f}, in which in the general formula, TM represents a transition metal, M represents a non-transition metal, x, tm, y, and f satisfy 1.75 ≤ x + tm + y ≤ 2 and 0 < f ≤ 0.7, and when Q = 2 × tm × {1 - (1 - f/2)⁵}, 0.8 ≤ Q ≤ 1.5 is satisfied, is preferably greater than or equal to 50 mass%, more preferably greater than or equal to 70 mass%, and still more preferably greater than or equal to 90 mass%, with respect to a total mass of the positive electrode active material.

Examples of the conductive agent contained in the positive electrode mixture layer include carbon powders such as carbon black, acetylene black, Ketjenblack, and graphite, and these conductive agents may be used alone or in combination of two or more thereof.

As the binding agent contained in the positive electrode mixture layer, for example, a fluorine-based resin such as polytetrafluoroethylene (PTFE) or polyvinylidene fluoride (PVdF), PAN, a polyimide-based resin, an acrylic resin, a polyolefin-based resin, styrenebutadiene rubber (SBR), CMC or a salt thereof, a polyacrylic acid (PAA) or a salt thereof (PAA-Na, PAA-K, or the like), polyvinyl alcohol (PVA), and the like can be used. These materials may be used alone or in combination of two or more thereof.

### <Negative Electrode>

The negative electrode 12 includes, for example, a negative electrode current collector such as a metal foil and a negative electrode mixture layer formed on the negative electrode current collector. The negative electrode current collector may be, for example, a foil of a metal, such as copper, that is stable in a potential range of the negative electrode, a film in which the metal is disposed on its surface layer. The negative electrode mixture layer contains, for example, a negative electrode active material, a binding agent, and the like.

The negative electrode active material contained in the negative electrode mixture layer is not particularly limited as long as it is a material capable of occluding and releasing lithium ions, and examples thereof include a carbon material, and an element capable of forming an alloy with lithium or a compound containing the element. As the carbon material, graphites such as natural graphite, non-graphitizable carbon, and artificial graphite, cokes, and the like can be used. Examples of the element capable of forming an alloy with lithium and the compound containing the element include silicon and tin, and silicon oxide and tin oxide formed by combining silicon and tin with oxygen. In addition to the above, a material having a higher charge-discharge potential with respect to metal lithium such as lithium titanate than a carbon material or the like can also be used. The binding agent contained in the negative electrode mixture layer may be the same as that in the positive electrode.

### <Separator>

For example, a porous sheet having an ion permeation property and an insulation property is used for the separator 13. Specific examples of the porous sheet include a fine porous thin film, a woven fabric, and a non-woven fabric. As a material of the separator 13, an olefin-based resin such as polyethylene or polypropylene, cellulose, and the like are preferable. The separator 13 may be a laminate including a cellulose fiber layer and a thermoplastic resin fiber layer formed of an olefin-based resin or the like, and the separator 13 may have a surface coated with an aramid resin or the like.

### EXAMPLES

Hereinafter, the present disclosure will be further described with reference to Examples, but the present disclosure is not limited to these Examples.

### <Example 1>

### [Preparation of Positive Electrode Active Material]

Lithium fluoride (LiF), lithium manganate (LiMnO₂), manganese(III) oxide (Mn₂O₃), lithium peroxide (Li₂O₂), magnesium oxide (MgO), gadolinium oxide (Gd₂O₃), and cerium oxide (CeO₂) were used as starting sources of a composite oxide, and the compounds were weighed and mixed so that a molar ratio of Li:Mn:Mg:Gd:Ce:F was 1.225:0.705:0.005:0.01:0.005:0.6. The mixed powder was charged into a planetary ball mill (Premium-Line P7 manufactured by Fritsch GmbH, rotation speed: 600 rpm, container: 45 mL pot formed of zirconia, ball: ϕ3 mm ball formed of zirconia) and treated in an Ar-atmosphere at room temperature for 35 hours (after 1 hour of the operation, a cycle of pausing for 10 minutes was repeated 35 times). In this way, a composite oxide represented by Li_{1.225}Mn_{0.705}Mg_{0.005}Gd_{0.01}Ce_{0.005}O_{1.4}F_{0.6} was obtained.

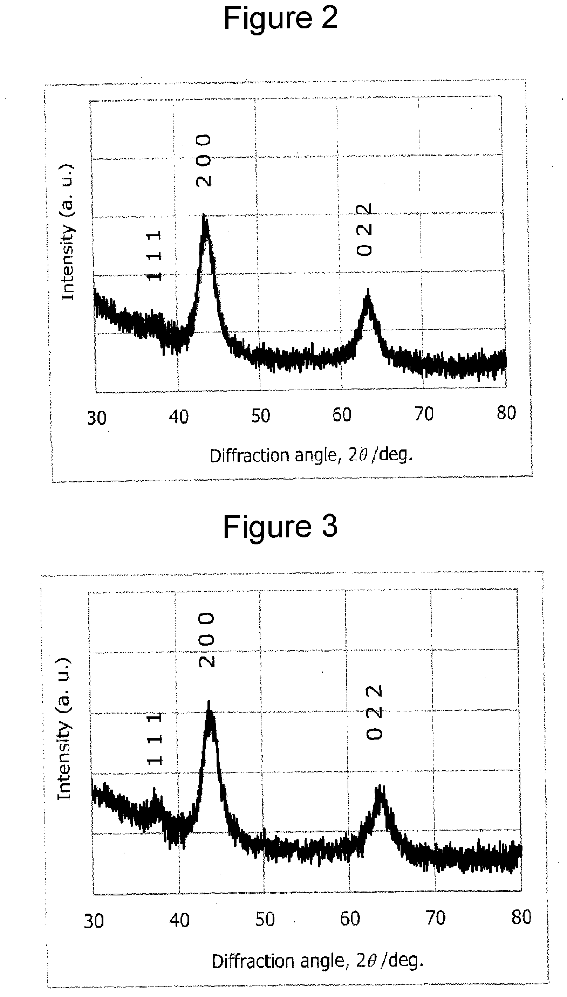

The obtained composite oxide was subjected to powder X-ray diffraction measurement, and the results are illustrated in FIG. 2. As a result of analyzing the crystal structure, it was confirmed that the crystal structure of the composite oxide belonged to a space group Fm-3m. The conditions of the powder X-ray diffraction measurement are as described above (the same conditions are applied to other Examples and Comparative Examples).

### [Manufacture of Positive Electrode]

70 parts by mass of the composite oxide, 20 parts by mass of acetylene black, and 10 parts by mass of polyvinylidene fluoride were mixed in terms of proportion, and N-methyl-2-pyrrolidone (NMP) was used as a dispersion medium to prepare a slurry for a positive electrode mixture layer. Next, the slurry for a positive electrode mixture layer was applied to an aluminum foil having a thickness of 15 µm and dried, and the obtained coating film was rolled to manufacture a positive electrode in which a positive electrode mixture layer was formed on both surfaces of the aluminum foil.

### [Preparation of Non-Aqueous Electrolyte]

Lithium hexafluorophosphate (LiPF₆) was dissolved in a mixed solvent obtained by mixing fluoroethylene carbonate (FEC) and methyl propionate (FMP) at a volume ratio of 1:3 so that a concentration thereof was 1 mol/liter to prepare a non-aqueous electrolyte.

### [Manufacture of Test Cell]

Electrode leads were attached to the metal lithium as the positive electrode and the negative electrode, respectively. Then, an electrode assembly with a separator interposed between the positive electrode and the negative electrode was produced, the electrode assembly was housed in an aluminum laminate film, and the non-aqueous electrolyte was injected and sealed. This was used as a test cell (non-aqueous electrolyte secondary battery) of Example 1.

### <Example 2>

A composite oxide represented by Li_{1.225}Mn_{0.7}Mg_{0.01}Ga_{0.01}Nb_{0.005}O_{1.4}F_{0.6} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), gallium oxide (Ga₂O₃), and niobium oxide (Nb₂O₅) were used as starting sources of a composite oxide, and the compounds were weighed so that a molar ratio of Li:Mn:Mg:Ga:Nb:F was 1.225:0.7:0.01:0.01:0.005:0.6. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.225}Mn_{0.7}Mg_{0.01}Ga_{0.01}Nb_{0.005}O_{1.4}F_{0.6}.

### <Example 3>

A composite oxide represented by Li_{1.143}Mn_{0.765}Mg_{0.02}Nb_{0.01}Ce_{0.005}O_{1.553}F_{0.447} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), niobium oxide (Nb₂O₅), and cerium oxide (CeO₂) were used as starting sources of a composite oxide, and the compounds were weighed so that a molar ratio of Li:Mn:Mg:Nb:Ce:F was 1.143:0.765:0.02:0.01:0.005:0.447. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.143}Mn_{0.765}Mg_{0.02}Nb_{0.01}Ce_{0.005}O_{1.553}F_{0.447}.

### <Example 4>

A composite oxide represented by Li_{1.168}Mn_{0.755}Gd_{0.005}Nb_{0.01}Ce_{0.005}O_{1.553}F_{0.447} was obtained in the same operation as that of Example 1, except that lithium fluoride (LiF), lithium manganate (LiMnO₂), manganese(III) oxide (Mn₂O₃), lithium peroxide (Li₂O₂), gadolinium oxide (Gd₂O₃), niobium oxide (Nb₂O₅), and cerium oxide (CeO₂) were used as starting sources of a composite oxide, and the compounds were weighed so that a molar ratio of Li:Mn:Gd:Nb:Ce:F was 1.168:0.755:0.005:0.01:0.005:0.447. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.168}Mn_{0.755}Gd_{0.005}Nb_{0.01}Ce_{0.005}O_{1.553}F_{0.447}.

### <Example 5>

A composite oxide represented by Li_{1.175}Mn_{0.76}Ga_{0.005}Nb_{0.005}Ce_{0.005}O_{1.55}F_{0.45} was obtained in the same operation as that of Example 1, except that lithium fluoride (LiF), lithium manganate (LiMnO₂), manganese(III) oxide (Mn₂O₃), lithium peroxide (Li₂O₂), gallium oxide (Ga₂O₃), niobium oxide (Nb₂O₅), and cerium oxide (CeO₂) were used as starting sources of a composite oxide, and the compounds were weighed so that a molar ratio of Li:Mn:Ga:Nb:Ce:F was 1.175:0.76:0.005:0.005:0.005:0.45. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.175}Mn_{0.76}Ga_{0.005}Nb_{0.005}Ce_{0.005}O_{1.55}F_{0.45}.

### <Example 6>

A composite oxide represented by Li_{1.2}Mn_{0.685}Ga_{0.005}Nb_{0.005}Ce_{0.005}O_{1.5}F_{0.5} was obtained in the same operation as that of Example 1, except that lithium fluoride (LiF), lithium manganate (LiMnO₂), manganese(III) oxide (Mn₂O₃), lithium peroxide (Li₂O₂), gallium oxide (Ga₂O₃), niobium oxide (Nb₂O₅), and cerium oxide (CeO₂) were used as starting sources of a composite oxide, and the compounds were weighed so that a molar ratio of Li:Mn:Ga:Nb:Ce:F was 1.2:0.685:0.005:0.005:0.005:0.5. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.2}Mn_{0.685}Ga_{0.005}Nb_{0.005}Ce_{0.005}O_{1.5}F_{0.5}.

### <Example 7>

A composite oxide represented by Li_{1.175}Mn_{0.7}Mg_{0.025}Ga_{0.025}Ce_{0.025}O_{1.55}F_{0.45} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), gallium oxide (Ga₂O₃), and cerium oxide (CeO₂) were used as starting sources of a composite oxide, and the compounds were weighed so that a molar ratio of Li:Mn:Mg:Ga:Ce:F was 1.175:0.7:0.025:0.025:0.025:0.45. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.175}Mn_{0.7}Mg_{0.025}Ga_{0.025}Ce_{0.025}O_{1.55}F_{0.45}.

### <Example 8>

A composite oxide represented by Li_{1.192}Mn_{0.73}Gd_{0.005}Nb_{0.01}Ce_{0.005}O_{1.702}F_{0.208} was obtained in the same operation as that of Example 1, except that lithium fluoride (LiF), lithium manganate (LiMnO₂), manganese(III) oxide (Mn₂O₃), lithium peroxide (Li₂O₂), gadolinium oxide (Gd₂O₃), niobium oxide (Nb₂O₅), and cerium oxide (CeO₂) were used as starting sources of a composite oxide, and the compounds were weighed so that a molar ratio of Li:Mn:Gd:Nb:Ce:F was 1.192:0.73:0.005:0.01:0.005:0.298. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.192}Mn_{0.73}Gd_{0.005}Nb_{0.01}Ce_{0.005}O_{1.702}F_{0.298}.

### <Example 9>

A composite oxide represented by Li_{1.2}Mn_{0.735}Mg_{0.005}Ga_{0.005}Nb_{0.005}O_{1.7}F_{0.3} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), gallium oxide (Ga₂O₃), and niobium oxide (Nb₂O₅) were used as starting sources of a composite oxide, and the compounds were weighed so that a molar ratio of Li:Mn:Mg:Ga:Nb:F was 1.2:0.735:0.005:0.005:0.005:0.3. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.2}Mn_{0.735}Mg_{0.005}Ga_{0.005}Nb_{0.005}O_{1.7}F_{0.3}.

### <Example 10>

A composite oxide represented by Li_{1.25}Mn_{0.73}Mg_{0.005}Gd_{0.005}Nb_{0.01}O_{1.702}F_{0.298} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), gadolinium oxide (Gd₂O₃), and niobium oxide (Nb₂O₅) were used as starting sources of a composite oxide, and the compounds were weighed so that a molar ratio of Li:Mn:Mg:Gd:Nb:F was 1.25:0.73:0.005:0.005:0.01:0.298. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.25}Mn_{0.73}Mg_{0.005}Gd_{0.005}Nb_{0.01}O_{1.702}F_{0.208}.

### <Example 11>

A composite oxide represented by Li_{1.15}Mn_{0.785}Mg_{0.005}Nb_{0.005}Ce_{0.005}O_{1.8}F_{0.2} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), niobium oxide (Nb₂O₅), and cerium oxide (CeO₂) were used as starting sources of a composite oxide, and the compounds were weighed so that a molar ratio of Li:Mn:Mg:Nb:Ce:F was 1.15:0.785:0.005:0.005:0.005:0.2. The obtained composite oxide was subjected to powder X-ray diffraction measurement, and the results are illustrated in FIG. 3. As a result of analyzing the crystal structure, it was confirmed that the crystal structure of the composite oxide belonged to a space group Fm-3m. The conditions for the powder X-ray diffraction measurement were as described above.

Then, a test cell was manufactured in the same manner as that of Example 1 using the composite oxide represented by Li_{1.15}Mn_{0.785}Mg_{0.005}Nb_{0.005}Ce_{0.005}O_{1.8}F_{0.2}.

### <Comparative Example 1>

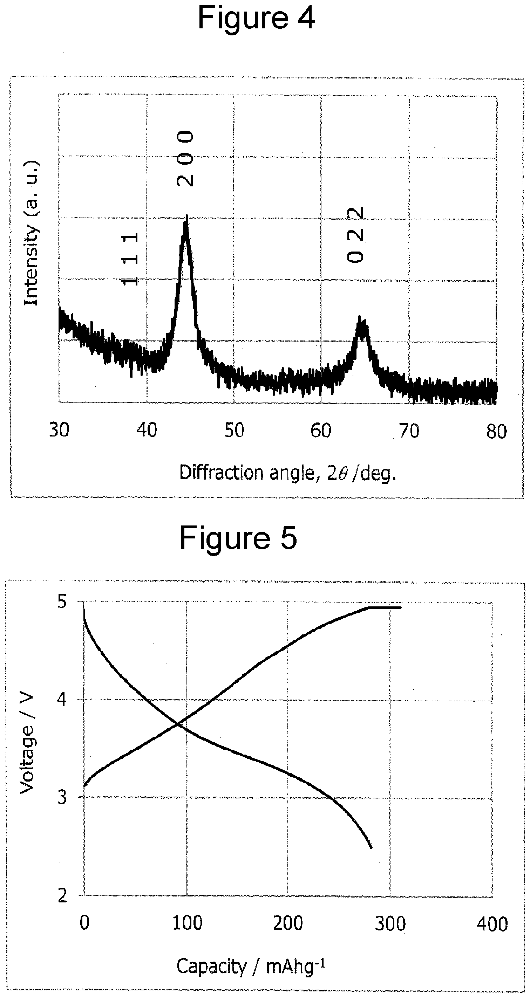

A composite oxide represented by Li_{1.25}Mn_{0.485}Ga_{0.005}Nb_{0.005}Ce_{0.005}O_{1.5}F_{0.5} was obtained in the same operation as that of Example 1, except that lithium fluoride (LiF), lithium manganate (LiMnO₂), manganese(III) oxide (Mn₂O₃), lithium peroxide (Li₂O₂), gallium oxide (Ga₂O₃), niobium oxide (Nb₂O₅), and cerium oxide (CeO₂) were used as starting sources of a composite oxide, and the compounds were weighed so that a molar ratio of Li:Mn:Ga:Nb:Ce:F was 1.25:0.485:0.005:0.005:0.005:0.5. The obtained composite oxide was subjected to powder X-ray diffraction measurement, and the results are illustrated in FIG. 4. As a result of analyzing the crystal structure, it was confirmed that the crystal structure of the composite oxide belonged to a space group Fm-3m.

Then, a test cell was manufactured in the same manner as that of Example 1 using the composite oxide represented by Li_{1.25}Mn_{0.485}Ga_{0.005}Nb_{0.005}Ce_{0.005}O_{1.5}F_{0.5}.

### <Comparative Example 2>

A composite oxide represented by Li_{1.25}Mn_{0.45}Mg_{0.025}Ce_{0.025}O_{1.5}F_{0.5} was obtained in the same operation as that of Example 1, except that lithium fluoride (LiF), lithium manganate (LiMnO₂), manganese(III) oxide (Mn₂O₃), lithium peroxide (Li₂O₂), magnesium oxide (MgO), and cerium oxide (CeO₂) were used as starting sources of a composite oxide, and the compounds were weighed so that a molar ratio of Li:Mn:Mg:Ce:F was 1.25:0.45:0.025:0.025:0.5. The obtained composite oxide was subjected to powder X-ray diffraction measurement and crystal structure analysis, and as a result, it was confirmed that the crystal structure of the composite oxide belonged to a space group Fm-3m.

Then, a test cell was manufactured in the same manner as that of Example 1 using the composite oxide represented by Li_{1.25}Mn_{0.45}Mg_{0.025}Ce_{0.025}O_{1.5}F_{0.5}.

### <Comparative Example 3>

A composite oxide represented by Li_{1.667}Mn_{0.333}O_{0.667}F_{1.333} was obtained in the same operation as that of Example 1, except that lithium fluoride (LiF), lithium manganate (LiMnO₂), manganese(III) oxide (Mn₂O₃), and lithium peroxide (Li₂O₂) were used as starting sources of a composite oxide, and the compounds were weighed so that a molar ratio of Li:Mn:F was 1.667:0.333:1.333. The obtained composite oxide was subjected to powder X-ray diffraction measurement and crystal structure analysis, and as a result, it was confirmed that the crystal structure of the composite oxide belonged to Fm-3m.

Then, a test cell was manufactured in the same manner as that of Example 1 using the composite oxide represented by Li_{1.667}Mn_{0.333}O_{0.667}F_{1.333}.

### <Comparative Example 4>

A composite oxide represented by Li_{1.2}Mn_{0.6}Ti_{0.2}O_{1.8}F_{0.2} was obtained in the same operation as that of Example 1, except that lithium fluoride (LiF), lithium manganate (LiMnO₂), manganese(III) oxide (Mn₂O₃), lithium peroxide (Li₂O₂), and titanium dioxide (TiO₂) were used as starting sources of a composite oxide, and the compounds were weighed so that a molar ratio of Li:Mn:Ti:F was 1.2:0.6:0.2:0.2. The obtained composite oxide was subjected to powder X-ray diffraction measurement and crystal structure analysis, and as a result, it was confirmed that the crystal structure of the composite oxide belonged to Fm-3m.

Then, a test cell was manufactured in the same manner as that of Example 1 using the composite oxide represented by Li_{1.2}Mn_{0.6}Ti_{0.2}O_{1.8}F_{0.2}.

### <Comparative Example 5>

A composite oxide represented by LiMnO₂ was obtained in the same manner as that of Example 1, except that LiMnO₂ was used as the composite oxide. The obtained composite oxide was subjected to powder X-ray diffraction measurement and crystal structure analysis, and as a result, it was confirmed that the crystal structure of the composite oxide belonged to Fm-3m.

Then, a test cell was manufactured in the same manner as that of Example 1 using the composite oxide represented by LiMnO₂.

### <Comparative Example 6>

A composite oxide represented by Li_{1.1}Mn_{0.6}O_{1.3}F_{0.7} was obtained in the same operation as that of Example 1, except that lithium fluoride (LiF), lithium manganate (LiMnO₂), manganese(III) oxide (Mn₂O₃), and lithium peroxide (Li₂O₂) were used as starting sources of a composite oxide, and the compounds were weighed so that a molar ratio of Li:Mn:F was 1.1:0.6:0.7. The obtained composite oxide was subjected to powder X-ray diffraction measurement and crystal structure analysis, and as a result, it was confirmed that the crystal structure of the composite oxide belonged to Fm-3m.

Then, a test cell was manufactured in the same manner as that of Example 1 using the composite oxide represented by Li_{1.1}Mn_{0.6}O_{1.3}F_{0.7}.

### <Comparative Example 7>

A composite oxide represented by Li_{1.14}Mn_{0.86}O_{1.3}F_{0.7} was obtained in the same operation as that of Example 1, except that lithium fluoride (LiF), lithium manganate (LiMnO₂), manganese(III) oxide (Mn₂O₃), and lithium peroxide (Li₂O₂) were used as starting sources of a composite oxide, and the compounds were weighed so that a molar ratio of Li:Mn:F was 1.14:0.86:0.7. The obtained composite oxide was subjected to powder X-ray diffraction measurement and crystal structure analysis, and as a result, it was confirmed that the crystal structure of the composite oxide belonged to Fm-3m.

Then, a test cell was manufactured in the same manner as that of Example 1 using the composite oxide represented by Li_{1.14}Mn_{0.86}O_{1.3}F_{0.7}.

### [Charge and Discharge Test]

Each of the test cells of the respective Examples and the respective Comparative Examples was subjected to constant current charge at a constant current of 0.1 C under a temperature environment of 25°C until a battery voltage reached 4.95 V, and subjected to constant voltage charge at 4.95 V until a current value reached 0.05 C. Thereafter, the test cell was subjected to constant current discharge at a constant current of 0.1 C until a battery voltage reached 2.5 V. Then, a value obtained by dividing the total amount of power at the time of discharge by the total current was obtained as a discharge voltage. In addition, the discharge capacity (mAh/g) at the time of performing the constant current discharge was determined.

In Table 1, the compositions of the composite oxides, the values of x + tm + y of the compositions (LiₓTMₜₘM_{y}O_{2-f}F_{f}: TM represents a transition metal and M represents a non-transition metal), the values of f, the values of 2 × tm × {1 - (1 - f/2)⁵} = Q, and the results of the discharge capacity and the discharge voltage of the respective Examples and the respective Comparative Examples are summarized.

**[Table 1]**

| | Composite oxide LiₓTMₜₘM_{y}O_{2-f}F_{f} (TM: transition metal, M: non-transition metal) | | | | Test results | |
|---|---|---|---|---|---|---|
| | Composition | x + y + tm | f | Q | Discharge capacity (mAh/g) | Discharge voltage (V) |
| Example 1 | Li_{1.225}Mn_{0.705}Mg_{0.005}Gd_{0.01}Ce_{0.005}O_{1.4}F_{0.6} | 1.95 | 0.6 | 1.20 | 281.3 | 3.562 |
| Example 2 | Li_{1.225}Mn_{0.7}Mg_{0.01}Ga_{0.01}Nb_{0.005}O_{1.4}F_{0.6} | 1.95 | 0.6 | 1.17 | 290.9 | 3.548 |
| Example 3 | Li_{1.143}Mn_{0.765}Mg_{0.02}Nb_{0.01}Ce_{0.005}O_{1.553F0.447} | 1.943 | 0.447 | 1.12 | 296.7 | 3.536 |
| Example 4 | Li_{1.168}Mn_{0.755}Gd_{0.005}Nb_{0.01}Ce_{0.005}O_{1.553F0.447} | 1.943 | 0.447 | 1.11 | 302.3 | 3.540 |
| Example 5 | Li_{1.175}Mn_{0.76}Ga_{0.005}Nb_{0.005}Ce_{0.005}O_{1.55}F_{0.45} | 1.95 | 0.45 | 1.11 | 285.5 | 3.539 |
| Example 6 | Li_{1.2}Mn_{0.685}Ga_{0.005}Nb_{0.005}Ce_{0.005}O_{1.5}F_{0.5} | 1.9 | 0.5 | 1.06 | 311.3 | 3.537 |
| Example 7 | Li_{1.175}Mn_{0.7}Mg_{0.025}Ga_{0.025}Ce_{0.025}O_{1.55}F_{0.45} | 1.95 | 0.45 | 1.04 | 292.9 | 3.517 |
| Example 8 | Li_{1.192}Mn_{0.73}Gd_{0.005}Nb_{0.01}Ce_{0.005}O_{1.702}F_{0.208} | 1.942 | 0.298 | 0.83 | 318.5 | 3.498 |
| Example 9 | Li_{1.2}Mn_{0.735}Mg_{0.005}Ga_{0.005}Nb_{0.005}O_{1.7}F_{0.}3 | 1.95 | 0.3 | 0.82 | 319.7 | 3.500 |
| Example 10 | Li_{1.25}Mn_{0.73}Mg_{0.005}Gd_{0.005}Nb_{0.01}O_{1.702}F_{0.298} | 2 | 0.298 | 0.82 | 311.2 | 3.447 |
| Example 11 | Li_{1.15}Mn_{0.785}Mg_{0.005}Nb_{0.005}Ce_{0.005}O_{1.8}F_{0.2} | 1.95 | 0.2 | 0.80 | 302.1 | 3.488 |
| Comparative Example 1 | Li_{1.25}Mn_{0.485}Ga_{0.005}Nb_{0.005}Ce_{0.005}O_{1.5}F_{0.5} | 1.75 | 0.5 | 0.76 | 169.9 | 3.287 |
| Comparative Example 2 | Li_{1.25}Mn_{0.45}Mg_{0.025}Ce_{0.025}O_{1.5}F_{0.5} | 1.75 | 0.5 | 0.72 | 126.6 | 3.205 |
| Comparative Example 3 | Li_{1.667}Mn_{0.333}O_{0.667}F_{1.333} | 1.993 | 1.333 | 0.66 | 25.0 | 3.250 |
| Comparative Example 4 | Li_{1.2}Mn_{0.6}Ti_{0.2}O_{1.8}F_{0.2} | 2 | 0.2 | 0.66 | 246.0 | 3.341 |
| Comparative Example 5 | LiMnO₂ | 2 | 0 | 0 | 165.9 | 3.398 |
| Comparative Example 6 | Li_{1.1}Mn_{0.6}O_{1.3}F_{0.7} | 1.7 | 0.7 | 1.06 | 183.8 | 3.378 |
| Comparative Example 7 | Li_{1.14}Mn_{0.86}O_{1.3}F_{0.7} | 2 | 0.7 | 1.52 | 218.7 | 3.419 |

In all of Examples 1 to 11, a higher discharge voltage was exhibited and a higher discharge capacity was obtained, compared to Comparative Examples 1 to 7. From these results, it can be said that a high discharge voltage can be obtained by using a composite oxide that has a crystal structure belonging to a space group Fm-3m and is represented by a general formula: LiₓTMtₘM_{y}O_{2-f}F_{f}, in which in the general formula, TM represents a transition metal, M represents a non-transition metal, x, tm, y, and f satisfy 1.75 ≤ x + tm + y ≤ 2 and 0 < f ≤ 0.7, and when Q = 2 × tm × {1 - (1 - f/2)⁵}, 0.8 ≤ Q ≤ 1.5 is satisfied.

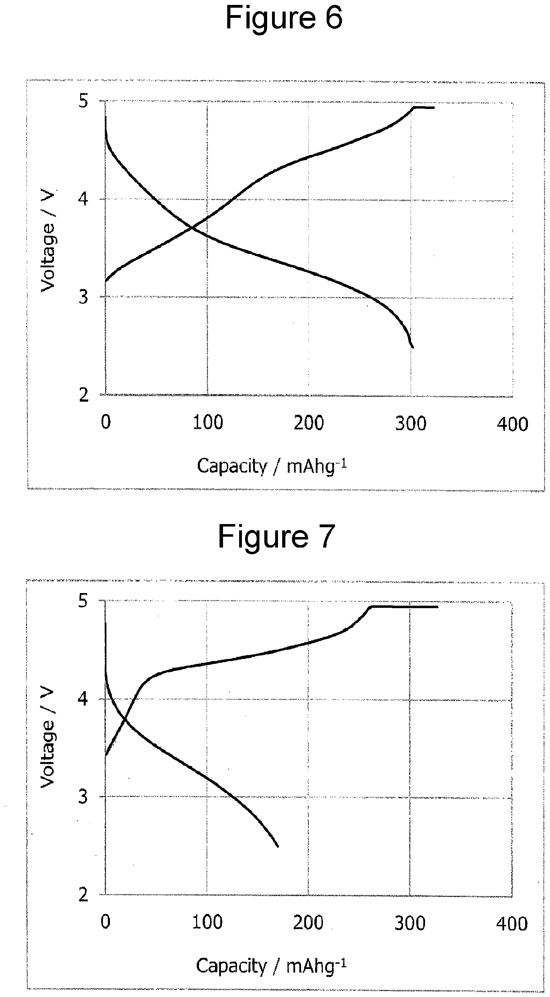

FIGS. 5 and 6 illustrate charge and discharge curves of Example 1 and Example 11, respectively. From these drawings, it was confirmed that in Examples described in the present invention, a high discharge voltage was exhibited and a high discharge capacity was obtained. In the other Examples 2 to 10, the same charge and discharge curves were obtained, and therefore, the excellent results as shown in Table 1 were obtained. On the other hand, FIG. 7 illustrates a charge and discharge curve of Comparative Example 1. As can be seen from the drawing, in Comparative Example 1, the discharge voltage is low, and only a low discharge capacity is obtained. In the other Comparative Examples 2 to 7, the same charge and discharge curves were obtained, and the results shown in Table 1 were inferior to those of Examples.

### REFERENCE SIGNS LIST

- 10: Non-aqueous electrolyte secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket

## Claims

1. A positive electrode active material for a non-aqueous electrolyte secondary battery, wherein the positive electrode active material is a composite oxide that has a crystal structure belonging to a space group Fm-3m and is represented by a general formula: LiₓTMtₘM_{y}O_{2-f}F_{f}, and in the general formula, TM represents a transition metal, M represents a non-transition metal, x, tm, y, and f satisfy 1.75 ≤ x + tm + y ≤ 2 and 0 < f ≤ 0.7, and when Q = 2 × tm × {1 - (1 - f/2)⁵}, 0.8 ≤ Q ≤ 1.5 is satisfied.

2. The positive electrode active material for a non-aqueous electrolyte secondary battery according to claim 1, wherein in the general formula, x, tm, y, and f satisfy 1.0 < x ≤ 1.4, 0.4 ≤ tm < 1.0, 0 ≤ y ≤ 0.2, and 0.2 ≤ f ≤ 0.6.

3. The positive electrode active material for a non-aqueous electrolyte secondary battery according to claim 1 or 2, wherein the composite oxide contains Mn as the transition metal (TM), and
in the general formula, a molar ratio tm_Mn of Mn in tm is 0.6 < tm_Mn < 0.8.

4. The positive electrode active material for a non-aqueous electrolyte secondary battery according to claim 3, wherein the composite oxide contains Mn and a transition metal other than Mn as the transition metal (TM).

5. The positive electrode active material for a non-aqueous electrolyte secondary battery according to claim 3, wherein the composite oxide contains at least one element of five elements of Gd, Ce, and Nb, which are the transition metals (TM), and Mg and Ga, which are the non-transition metals (M).

6. The positive electrode active material for a non-aqueous electrolyte secondary battery according to claim 3, wherein the composite oxide contains at least three elements of five elements of Gd, Ce, and Nb, which are the transition metals (TM), and Mg and Ga, which are the non-transition metals (M).

7. The positive electrode active material for a non-aqueous electrolyte secondary battery according to claim 5 or 6, wherein a molar ratio B of each of Mg, Gd, Ce, Nb, and Ga in the composite oxide is 0 <B ≤ 0.025.
